(19) Europäisches Patentamt / European Patent Office / Office européen des brevets

(11) **EP 3 080 816 B1**

(12) **FASCICULE DE BREVET EUROPEEN**

(45) Date de publication et mention de la délivrance du brevet:
**07.02.2018 Bulletin 2018/06**

(21) Numéro de dépôt: **14827501.9**

(22) Date de dépôt: **11.12.2014**

(51) Int Cl.:
*G21B 3/00* *(2006.01)*

(86) Numéro de dépôt international:
**PCT/FR2014/053284**

(87) Numéro de publication internationale:
**WO 2015/087007 (18.06.2015 Gazette 2015/24)**

(54) **PROCÉDÉ DE STRUCTURATION SPATIALE CONTRÔLÉE OPTIQUEMENT D'UN PLASMA SUR UNE CIBLE SOLIDE**

VERFAHREN ZUR OPTISCH GESTEUERTEN RÄUMLICHEN STRUKTURIERUNG EINES PLASMAS AUF EINEM FESTEN ZIEL

METHOD FOR THE OPTICALLY-CONTROLLED SPATIAL STRUCTURING OF A PLASMA ON A SOLID TARGET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2013 FR 1362611**

(43) Date de publication de la demande:
**19.10.2016 Bulletin 2016/42**

(73) Titulaire: **Commissariat à l'Énergie Atomique et aux Énergies Alternatives 75015 Paris (FR)**

(72) Inventeurs:
• **QUERE, Fabien**
  **F-78140 Vélizy-Villacoublay (FR)**
• **KAHALY, Subhendu**
  **F-91140 Villebon sur Yvette (FR)**
• **MONCHOCE, Sylvain**
  **F-59112 Annoeullin (FR)**

(74) Mandataire: **Lebkiri, Alexandre Cabinet Camus Lebkiri 25, Rue de Maubeuge 75009 Paris (FR)**

(56) Documents cités:
• Pai et al.: "Fabrication of spatial transient-density structures as high-field plasma photonic devices", Physics of Plasmas, vol. 12, 070707, 2005, pages 1-4, XP002728087, Extrait de l'Internet: URL:http://ltlw3.iams.sinica.edu.tw/docume nt/journal_paper/POP_12_070707_05.pdf [extrait le 2014-07-31]
• HSIEH ET AL.: "Applications of laser-fabricated plasma structures in laser-wakefield accelerators, X-ray lasers and plasma nonlinear optics", JOURNAL OF THE KOREAN PHYSICAL SOCIETY, vol. 53, no. 6, octobre 2008 (2008-10), pages 3719-3725, XP002728088, South Korea ISSN: 0374-4884
• Key et al.: "The Potential of FastIgnition and RelatedExperiments with aPetawatt Laser Facility", 1999 Symposiumon Cost-Effective Steps to Fusion Power,Washington, D.C., March 25, 2000 UCRL-JC-138315, 6 avril 2000 (2000-04-06), pages 1-12, XP002728089, Extrait de l'Internet: URL:https://e-reports-ext.llnl.gov/pdf/237 744.pdf [extrait le 2014-08-01]
• MURNANE M M ET AL: "EFFICIENT COUPLING OF HIGH-INTENSITY SUBPICOSECOND LASER PULSES INTO SOLIDS", APPLIED PHYSICS LETTERS, AMERICAN INSTITUTE OF PHYSICS, US, vol. 62, no. 10, 8 mars 1993 (1993-03-08), pages 1068-1070, XP000345978, ISSN: 0003-6951, DOI: 10.1063/1.108797

- **York et al.: "Direct laser acceleration of electrons in thecorrugated plasma waveguide", University of Maryland , 2 septembre 2008 (2008-09-02), pages 1-35, XP002728090, Extrait de l'Internet: URL:http://fsc.lle.rochester.edu/pub/HEDLP /presentations/York.pdf [extrait le 2014-08-01]**

**Description**

**DOMAINE TECHNIQUE DE L'INVENTION**

Le domaine technique de l'invention est celui des procédés de structuration spatiale contrôlée optiquement d'un plasma sur une cible solide.

La présente invention trouve une application particulièrement intéressante dans le domaine de l'interaction des lasers femtosecondes intenses avec la matière, et notamment dans le domaine de l'accélération laser de particules, neutres ou chargées.

**ARRIERE-PLAN TECHNOLOGIQUE DE L'INVENTION**

Exposer de la matière à des champs électromagnétiques extrêmement importants permet d'étudier la physique fondamentale d'interactions hautement non linéaires et d'explorer leurs applications potentielles, par exemple dans le domaine de l'accélération laser de particules neutres ou chargées, ou de la génération d'harmoniques d'ordre élevé.

Dans ce but, on souhaite :

- d'une part, atteindre la plus haute amplitude de champ possible à la surface d'une cible au moyen d'une source laser de haute intensité ;
- d'autre part, optimiser le couplage entre la source laser et la surface de la cible.

La technologie des lasers femtosecondes permet désormais d'atteindre des puissances de crête supérieures à 1 pétawatt. Par ailleurs, il a été démontré que l'utilisation d'une cible présentant une structuration spatiale de surface permettait d'améliorer le couplage entre une source laser et ladite cible. L'introduction de modulations spatiales à la surface d'une cible solide peut contribuer à l'obtention d'importantes augmentations locales du champ électromagnétique lors de l'irradiation laser de ladite cible solide. Des modulations spatiales périodiques peuvent en outre permettre de coupler efficacement le champ laser avec des modes d'excitation collectifs, appelés plasmons, permettant potentiellement une très grande absorption lumineuse. Dans le cas de l'accélération laser de particules, une telle amélioration du couplage se traduit par une augmentation du champ électromagnétique à la surface de la cible solide et par l'augmentation de l'énergie des particules accélérées. On souhaite donc pouvoir structurer des cibles solides, typiquement à l'échelle du micromètre ou du nanomètre.

Il existe, pour de tels domaines d'application de haute intensité, des procédés de micro- et de nano-structuration mécanique de cibles solides, par déformation mécanique, par exemple par embossage, des cibles solides. De telles cibles solides structurées en surface ont par exemple été utilisées dans des expériences d'interaction laser-matière, à des intensités de l'ordre de $10^{15}$ W/cm$^2$ afin d'optimiser la génération d'électrons chauds et l'émission résultante de rayons X durs, ainsi que plus récemment à des intensités relativistes afin d'augmenter l'énergie de protons accélérés. Néanmoins, ces procédés mettent en oeuvre une ingénierie longue et complexe. Il est par exemple technologiquement très délicat de générer des modulations transverses à une petite échelle et de manière contrôlée sur les films nanométriques typiquement utilisés pour l'accélération laser d'ions et de protons. Il est notamment impossible de structurer les cibles in situ, durant une expérience : le procédé de structuration a lieu très en amont de l'irradiation laser. Les procédés de structuration mécanique sont également limités à un certain type de matériaux pouvant être mis en forme à la faible échelle spatiale requise.

La création d'une structure spatiale déterminée par intéraction d'un faisceau laser avec un plasma est par exemple divulguée dans Pai et al.: "Fabrication of spatial transient-density structures as high-field plasma photonic devices", Physics of Plasmas, vol. 12, 070707, 2005, pages 1-4.

**RESUME DE L'INVENTION**

L'invention offre une solution aux problèmes évoqués précédemment, en proposant un procédé de structuration spatiale d'une cible solide plus rapide et plus simple à mettre en oeuvre que les solutions existantes de déformation mécanique, et permettant notamment une structuration dynamique et in situ de la cible solide tout en étant compatible avec des applications de haute intensité.

L'invention concerne donc essentiellement un procédé de structuration spatiale dynamique contrôlée optiquement d'un plasma sur une cible solide comportant les étapes suivantes :

- une première étape selon laquelle on envoie, au moyen d'une source laser, au moins une impulsion laser présentant une mise en forme spatiale, dite « impulsion de structuration », sur une première zone de la cible solide ;
- une deuxième étape selon laquelle on forme un plasma spatialement structuré à la surface de la première zone de la cible solide au moyen de ladite au moins une impulsion de structuration.

Grâce à l'invention, on utilise une impulsion de structuration présentant une mise en forme spatiale pour former un plasma spatialement structuré à la surface d'une cible solide. La formation et la croissance dudit plasma à la surface de la cible solide sont contrôlées dynamiquement, sur une échelle temporelle suffisante pour permettre une interaction ultérieure d'une impulsion laser principale avec ledit plasma, c'est-à-dire une échelle temporelle typiquement inférieure à une centaine de picosecondes, et par exemple de l'ordre de plusieurs dizaines de picosecondes. Le plasma spatialement structuré formé à la surface de la cible solide est apte à interagir avec une impulsion laser principale sans être détruit par ladite impulsion laser principale. Dans cet exemple typique d'utilisation de l'invention, une même source laser présentant un fort contraste temporel envoie au moins une impulsion de structuration sur la cible solide, puis l'impulsion laser principale sur le plasma formé à la surface de la cible solide ; l'impulsion de structuration et l'impulsion laser principale étant temporellement séparées par un délai réglable. On permet ainsi une structuration spatiale in situ du plasma à la surface de la cible solide, ainsi qu'une irradiation éventuelle dudit plasma spatialement structuré par une impulsion laser principale et, dans ce dernier cas, une interaction entre le plasma spatialement structuré et l'impulsion laser principale. Il est à noter qu'il existe des procédés de structuration spatiale d'un plasma sur une cible gazeuse. Néanmoins, ces procédés ne sont pas compatibles avec l'utilisation de cibles solides. Une contrainte particulière à l'emploi d'une cible solide est en effet de parvenir à former, à la surface de ladite cible solide, une structuration spatiale qui soit apte à effectivement interagir, le cas échéant, avec une impulsion principale. On souhaite autrement dit que la structuration spatiale soit conservée jusqu'à l'arrivée de ladite impulsion principale, puis lors de son irradiation par ladite impulsion principale. Les procédés de structuration spatiale de plasma sur cible gazeuse ne permettent pas d'atteindre ce but. Au contraire, avec de tels procédés, une structuration spatiale formée à la surface d'une cible solide serait détruite avant même l'arrivée de l'impulsion principale, ce qui aurait définitivement dissuadé un homme du métier d'employer un tel procédé sur une cible solide. Les défauts d'une impulsion laser, relatifs notamment à un piédestal d'émission spontanée amplifiée ASE (de l'anglais « Amplified Spontaneous Emission ») de l'impulsion laser, sont quantifiés par la notion de contraste temporel. On définit le contraste temporel d'une impulsion laser présentant une impulsion principale et un piédestal comme étant le rapport de l'intensité de l'impulsion principale, sur l'intensité du piédestal. Lorsqu'on envoie une impulsion laser sur une cible, la cible est d'abord atteinte par le piédestal, puis par l'impulsion principale. En fonction du contraste temporel, le piédestal est donc susceptible de détruire une structuration spatiale présente à la surface de la cible avant l'arrivée de l'impulsion principale, empêchant l'irradiation de la structuration spatiale par l'impulsion principale, et donc l'interaction de l'impulsion principale avec la structuration spatiale. Les cibles solides, qui présentent des propriétés différentes des cibles gazeuses, nécessitent notamment un meilleur contraste temporel que les cibles gazeuses.

Outre les caractéristiques qui viennent d'être évoquées dans le paragraphe précédent, le procédé de structuration spatiale dynamique contrôlée optiquement d'un plasma sur une cible solide selon l'invention peut présenter une ou plusieurs caractéristiques complémentaires parmi les suivantes, considérées individuellement ou selon toutes les combinaisons techniquement possibles :

- Selon un premier mode de réalisation de l'invention, une unique impulsion de structuration est envoyée sur la première zone de la cible solide lors de la première étape, la mise en forme spatiale de l'unique impulsion de structuration étant obtenue grâce à l'une des techniques suivantes :

  ○ un miroir déformable ;
  ○ un masque de phase ;
  ○ un masque d'amplitude.

- Selon un deuxième mode de réalisation de l'invention, une pluralité d'impulsions de structuration est envoyée sur la première zone de la cible solide lors de la première étape, la pluralité d'impulsions de structuration interférant à la surface de la première zone de la cible solide et entraînant la formation du plasma spatialement structuré à la surface de la première zone de la cible solide.

Le deuxième mode de réalisation comprend le cas simple où des première et deuxième impulsions de structuration interfèrent à la surface de la première zone de la cible solide. Le motif d'interférence des première et deuxième impulsions de structuration est typiquement un réseau sinusoïdal. Le deuxième mode de réalisation comprend également le cas complexe où plus de deux impulsions de structuration interfèrent à la surface de la première zone de la cible solide. On peut ainsi avantageusement obtenir différents motifs d'interférence, présentant différents degrés de complexité, en variant notamment le nombre d'impulsions de structuration.

Il est également possible, selon le premier ou le deuxième mode de réalisation, de convertir la ou les impulsions de structuration à des fréquences plus élevées, par exemple par génération de seconde harmonique, avant de les focaliser à la surface de la première zone de la cible solide. On permet ainsi avantageusement l'obtention d'une structuration spatiale plus fine à la surface de la première zone de la cible solide.

- Selon le premier ou le deuxième mode de réalisation, la ou les impulsions de structuration présentent avantageusement une durée temporelle inférieure à 1 picoseconde. Une telle durée temporelle inférieure à 1 picoseconde permet de dissocier une première phase de création et de chauffage du plasma, d'une deuxième phase d'expansion dudit plasma vers le vide, qui aboutit à la formation de la structuration spatiale à la surface de la cible solide. Cette séparation des première et deuxième phases permet d'assurer un meilleur contrôle de la structuration spatiale formée à la surface de la cible solide.

- La ou les impulsions de structuration présentent avantageusement, à la surface de la première zone de la cible solide, une fluence supérieure au seuil de dommage laser du matériau de la première cible solide. La valeur requise pour la fluence de la ou des impulsions de structuration à la surface de la première zone de la cible solide est typiquement de l'ordre de 1 à quelques dizaines de J/cm$^2$ et dépend notamment du matériau de la cible solide.

- Le procédé de l'invention comporte avantageusement une troisième étape selon laquelle on envoie, au moyen de la source laser, une impulsion laser principale sur le plasma spatialement structuré préalablement formé à la surface de la première zone de la cible solide, l'impulsion laser principale présentant un contraste temporel élevé, tel que le plasma spatialement structuré préalablement formé à la surface de la première zone de la cible solide n'est pas détruit par un piédestal de l'impulsion laser principale, pour permettre l'irradiation effective du plasma spatialement structuré par l'impulsion laser principale et l'interaction dudit plasma spatialement structuré avec ladite impulsion laser principale.
  Les caractéristiques de l'impulsion laser principale, notamment en matière de durée et d'intensité, peuvent être très variées, en fonction des applications visées. On note toutefois que le plasma spatialement structuré formé à la surface de la cible solide grâce au procédé de l'invention peut interagir avec une impulsion laser principale très intense, par exemple de l'ordre de 10$^{18}$ W/cm$^2$. On entend typiquement par contraste temporel élevé, un contraste temporel supérieur ou égale à 10$^{10}$, à des délais supérieurs à 10 ps avant l'impulsion laser principale.

- Le délai temporel entre la ou les impulsions de structuration envoyées lors de la première étape d'une part, et l'impulsion laser principale envoyée lors de la troisième étape d'autre part, est avantageusement inférieur à 100 picosecondes. Un tel délai temporel inférieur à 100 picoseconde contribue à garantir que le plasma spatialement structuré demeure bien présent à la surface de la cible solide lorsque l'impulsion laser principale est à son tour envoyée vers la cible solide, et donc que l'impulsion laser principale peut véritablement interagir avec ledit plasma spatialement structuré. En effet, lorsque le délai temporel entre la ou les impulsions d'une part, et l'impulsion laser principale d'autre part, devient trop important - typiquement, lorsque ce délai temporel devient supérieur à 100 ps - plus les effets bidimensionnels deviennent importants dans l'expansion hydrodynamique du plasma, et vont commencer à lisser de façon significative la structure spatiale formée à la surface de la cible, la rendant ainsi peu contrôlable et moins facilement utilisable.

- Le procédé de l'invention comporte avantageusement une étape de structuration spatiale de la première zone de la cible solide avec une première structure, et une étape de structuration spatiale d'une deuxième zone de la cible solide avec une deuxième structure, la deuxième structure étant spatialement distincte de la première structure. Il est ainsi possible, grâce au procédé de l'invention, d'obtenir une pluralité de structures spatiales distinctes à la surface d'une même cible solide.

- Les première et deuxième structures spatiales sont avantageusement distinctes de par au moins un des paramètres suivants :

  ○ leur période spatiale ;
  ○ leur profondeur.

L'invention et ses différentes applications seront mieux comprises à la lecture de la description qui suit et à l'examen des figures qui l'accompagnent.

**BREVE DESCRIPTION DES FIGURES**

Les figures sont présentées à titre indicatif et nullement limitatif de l'invention.

- La figure 1 montre un diagramme des étapes d'un procédé de structuration spatiale contrôlée optiquement d'un plasma sur une cible solide selon un mode de réalisation de l'invention.

- La figure 2 montre une représentation schématique d'un dispositif de structuration spatiale contrôlée optiquement d'un plasma sur une cible solide.
- La figure 3a montre l'évolution temporelle expérimentale du profil spatial d'un décalage de phase induit sur une tache focale d'une impulsion de sonde par un plasma en expansion déclenché par une pré-impulsion laser.
- La figure 3b montre l'évolution expérimentale de la vitesse d'expansion du plasma en expansion de la figure 3a en fonction de la fluence d'une pré-impulsion laser déclenchant le plasma.
- La figure 3c montre un graphique expérimental de l'évolution de la température électronique d'un plasma à la surface d'une cible solide en fonction de la fluence d'une pré-impulsion laser déclenchant le plasma.
- La figure 4a montre une représentation schématique d'un dispositif expérimental permettant de faire interférer deux pré-impulsions synchronisées sur la cible solide de la figure 2.
- La figure 4b montre une distribution d'intensité expérimentale du motif d'interférence à la surface de la cible solide de la figure 2 d'une première pré-impulsion et d'une deuxième pré-impulsion synchronisées, ainsi que la distribution d'intensité d'une impulsion principale.
- La figure 4c montre une simulation d'un premier profil de densité d'un réseau plasma structuré, obtenu pour un premier délai après l'arrivée de première et deuxième pré-impulsions sur la cible solide de la figure 2.
- La figure 4d montre une simulation d'un deuxième profil de densité du réseau plasma structuré de la figure 4c, obtenu pour un deuxième délai supérieur au premier délai après l'arrivée des première et deuxième pré-impulsions sur la cible solide de la figure 2.
- La figure 5a montre un premier spectre expérimental d'harmoniques d'un premier type résolu angulairement induit par un plasma structuré à la surface d'une cible solide, avec un contraste maximum pour le plasma structuré.
- La figure 5b montre un deuxième spectre expérimental d'harmonique du premier type résolu angulairement induit par un plasma structuré à la surface d'une cible solide, avec un contraste minimum pour le plasma structuré.
- La figure 5c montre un premier spectre expérimental d'harmoniques d'un deuxième type résolu angulairement induit par un plasma structuré à la surface d'une cible solide, avec un contraste maximum pour le plasma structuré.
- La figure 5d montre un deuxième spectre expérimental d'harmonique du deuxième type résolu angulairement induit par un plasma structuré à la surface d'une cible solide, avec un contraste minimum pour le plasma structuré.
- La figure 6a montre une simulation des profils de phase et d'amplitude d'une première source non perturbée modulée par un réseau sinusoïdal plasma.
- La figure 6b montre une simulation des premières répliques multiples en champ lointain du faisceau harmonique non perturbé, induites par le réseau sinusoïdal plasma de la figure 6a, et dont la combinaison produit un premier motif de diffraction total qui est mesuré expérimentalement.
- La figure 6c montre une simulation des profils de phase et d'amplitude d'une deuxième source non perturbée modulée par le réseau sinusoïdal plasma de la figure 6a.
- La figure 6d montre une simulation des deuxièmes répliques multiples en champ lointain du faisceau harmonique non perturbé, induites par le réseau sinusoïdal plasma de la figure 6a, et dont la combinaison produit un deuxième motif de diffraction total qui est mesuré expérimentalement.
- La figure 6e montre une simulation des profils de phase et d'amplitude d'une troisième source non perturbée modulée par le réseau sinusoïdal de la figure 6a.
- La figure 6f montre une simulation des troisièmes répliques multiples en champ lointain du faisceau harmonique non perturbé, induites par le réseau sinusoïdal plasma de la figure 6a, et dont la combinaison produit un troisième motif de diffraction total qui est mesuré expérimentalement.

## DESCRIPTION DETAILLEE D'AU MOINS UN MODE DE REALISATION DE L'INVENTION

Sauf précision contraire, un même élément apparaissant sur des figures différentes présente une référence unique.

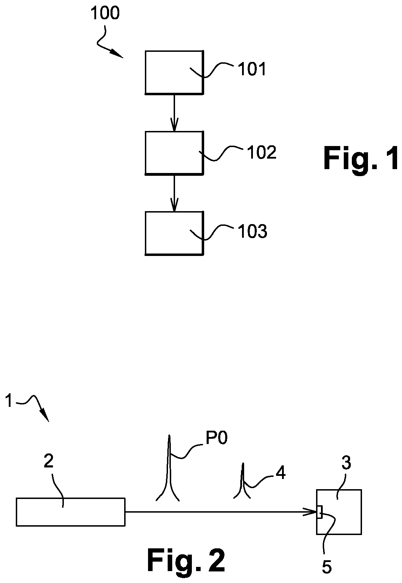

La figure 1 montre un diagramme des étapes d'un procédé 100 de structuration spatiale contrôlée optiquement d'un plasma sur une cible solide selon un mode de réalisation de l'invention. Le procédé 100 comporte :

- une première étape 101 d'envoi sur une première zone de la cible solide d'au moins une impulsion laser présentant une mise en forme spatiale, dite « impulsion de structuration » ;
- une deuxième étape 102 de formation d'un plasma spatialement structuré à la surface de la première zone de la cible solide, au moyen de ladite au moins une impulsion de structuration.

Selon un premier mode de réalisation de l'invention, une unique impulsion de structuration est envoyée sur la première zone de la cible solide lors de la première étape 101. Cette unique impulsion de structuration est mise en forme spatialement, par exemple au moyen d'un miroir déformable, d'un masque de phase ou d'un masque d'amplitude. Selon un deuxième mode de réalisation de l'invention, une pluralité d'impulsions de structuration est envoyée sur la première zone de la cible solide lors de la première étape 101. Selon ce deuxième mode de réalisation de l'invention, la formation du plasma spatialement structuré à la surface de la première zone de la cible solide se fait au moyen de l'interférence des impulsions de structuration de la pluralité d'impulsions de structuration à la surface de la première zone de la cible solide. Chaque impulsion de structuration de la pluralité d'impulsions de structuration est focalisée à la surface de la première zone de la cible solide, et parvient de manière synchrone à la surface de ladite première zone de la cible solide. Selon un exemple particulier de ce deuxième mode de réalisation, une première impulsion de structuration et une deuxième impulsion de structuration sont envoyées sur la première zone de la cible solide lors de la première étape 101 et la formation du plasma spatialement structuré à la surface de la première zone de la cible solide se fait au moyen de l'interférence des première et deuxième impulsions de structuration à la surface de la première zone de la cible solide. Le procédé 100 comportera avantageusement, postérieurement aux première et deuxième étapes 101 et 102 décrites ci-dessus, une troisième étape 103 d'envoi, sur le plasma spatialement structuré préalablement formé à la surface de la première zone de la cible solide, d'une impulsion laser principale. Le plasma spatialement structuré va permettre d'optimiser le couplage entre la source laser et la surface de la cible solide, contribuant ainsi à atteindre localement la plus haute amplitude de champ possible. Concernant la mise en oeuvre pratique du procédé 100, selon le premier ou le deuxième mode de réalisation, on pourra par exemple procéder selon l'une des deux approches suivantes :

- à partir d'une source laser, utiliser plusieurs portions d'un même faisceau laser afin de générer les impulsions de structuration d'une part, et l'impulsion laser principale d'autre part ;
- à partir d'une source laser, utiliser plusieurs faisceaux lasers indépendants synchrones afin de générer les impulsions de structuration d'une part, et l'impulsion laser principale d'autre part. Dans ce dernier cas, la séparation des faisceaux pourra avoir lieu en différents endroits de la chaîne laser, y compris très en amont de la chaîne laser, à condition de parvenir à conserver une bonne synchronisation entre les différents faisceaux.

L'utilisation d'une unique source laser pour la génération des impulsions de structuration d'une part et de l'impulsion principale d'autre part assure un bon synchronisme entre lesdites impulsions de structuration et impulsion principale. On fait suivre un premier chemin optique aux impulsions de structuration, et un deuxième chemin optique, plus long que le premier chemin optique, à l'impulsion principale, afin que l'impulsion principale parvienne sur la cible solide après la ou les impulsions de structuration. Le délai entre la ou les impulsions de structuration et l'impulsion principale sera typiquement choisi inférieur à 100 ps.

Cette troisième étape 103 est particulièrement intéressante pour plusieurs domaines d'applications, en particulier pour l'accélération laser de particules ainsi que pour la génération et l'étude d'harmoniques d'ordres élevés.

La formation du plasma spatialement structuré à la surface de la première zone de la cible solide est dynamique : la structuration spatiale existe sur une échelle de temps allant typiquement de 100 fs à 100 ps. Cette échelle de temps est suffisante pour que l'impulsion laser principale envoyée lors de la troisième étape 103 interagisse effectivement avec le plasma spatialement structuré à la surface de la première zone de la cible solide. La formation dynamique de ce plasma structuré nécessite un contrôle précis du délai temporel séparant l'envoi de la ou des impulsions de structuration d'une part, et l'envoi de l'impulsion principale d'autre part.

Le procédé de l'invention permet donc la structuration spatiale dynamique de la surface d'une cible solide, en venant former un plasma structuré, dont la croissance est contrôlée, à la surface de ladite cible solide. Le procédé de l'invention permet l'utilisation d'une grande variété de cibles solides, tant pour les matériaux que pour les dimensions. La cible solide utilisée présentera avantageusement au moins une surface ou une portion de surface plane, sur laquelle la ou les impulsions de structuration seront envoyées pour la formation d'un plasma structuré. Toutefois, on pourra également envisager, selon une alternative de réalisation du procédé de l'invention, l'envoi de la ou des impulsions de structuration sur une surface non plane de la cible solide.

La formation in situ de la structuration spatiale à la surface de la cible solide permet avantageusement une grande adaptabilité, et ce de manière rapide, dans le choix des paramètres de structuration spatiale, en fonction des applications visées. Les paramètres de structuration spatiale sont par exemple choisis parmi la liste suivante :

- période spatiale de la structuration spatiale ;
- profondeur de la structuration spatiale.

En particulier, dans le cas du deuxième mode de réalisation où une pluralité d'impulsions de structuration est envoyée à la surface de la première zone de la cible solide, les paramètres de structuration spatiale seront notamment contrôlés grâce :

- au nombre d'impulsions de structuration de la pluralité d'impulsions de structuration ;
- à la position relative dans l'espace des différentes impulsions de structuration de la pluralité d'impulsions de structuration ;

- à l'intensité relative des différentes impulsions de structuration de la pluralité d'impulsions de structuration ;
- au délai relatif entre la pluralité d'impulsions de structuration d'une part, et l'impulsion laser principale d'autre part.

La mise en oeuvre de deux impulsions de structuration permettra typiquement d'obtenir un motif d'interférence sinusoïdal, et donc une structuration spatiale sinusoïdale du plasma à la surface de la première zone de la cible solide. La mise en oeuvre de plus de deux impulsions de structuration pourra permettre l'obtention de structurations spatiales plus complexes, par exemple en plusieurs dimensions, avec plusieurs fréquences spatiales.

On pourra avantageusement, grâce au procédé de l'invention :

- réaliser une première structuration spatiale à la surface d'une première zone d'une cible solide, puis l'utiliser par exemple en envoyant une impulsion principale sur ladite première structuration spatiale formée ;
- puis, dans un deuxième temps, réaliser une deuxième structuration spatiale, dont les paramètres pourront être distincts de la première structuration spatiale précédemment réalisée, à la surface d'une deuxième zone de ladite cible solide. Afin de ne plus irradier la première zone de la cible solide et d'irradier ladite deuxième zone de la cible solide, on pourra translater la cible solide, par exemple au moyen d'un support commandé de la cible solide.

Dans le cadre d'applications utilisant des cibles solides spatialement structurées, on souhaite généralement tester plusieurs types de structuration spatiale. Pour ce faire, actuellement, il faut fabriquer une cible par type de structuration spatiale que l'on souhaite tester. En effet, les cibles solides spatialement structurées classiques présentent un seul et unique type de structuration spatiale, statique, qui ne peut pas être modifié. Le procédé de l'invention permet avantageusement de varier simplement les paramètres de structuration spatiale à la surface d'une même cible solide. En effet, plusieurs types différents de structuration spatiale peuvent être formés in situ sur une même cible solide. En outre, il est à noter que de nombreuses applications susceptibles d'utiliser une cible solide spatialement structurée ont lieu sous vide, ce qui implique une étape longue d'établissement du vide, après la mise en place d'une cible solide classique spatialement structurée dans un montage optique, et avant d'envoyer une impulsion principale. Il existe actuellement des systèmes complexes de porte-cible permettant de changer une cible solide classique sans rompre le vide. En l'absence d'un tel système, il sera nécessaire de ré-établir le vide après chaque changement de cible solide, avant de poursuivre les manipulations. Le procédé de l'invention permet donc avantageusement de s'affranchir de l'utilisation d'un tel système de porte-cible complexe, tout en conservant le vide éventuellement établi et donc en gagnant un temps précieux.

La figure 2 montre une représentation schématique d'un dispositif 1 de structuration spatiale contrôlée optiquement d'un plasma sur une cible solide selon un mode de réalisation de l'invention.

Le dispositif 1 comporte une source laser 2 et une cible solide 3.

La source laser 2 est apte à générer des impulsions de structuration 4, pour la formation d'un plasma 5 sur la cible solide 3. La source laser 2 est également apte à générer au moins une impulsion principale PO, pour l'interaction de ladite impulsion principale P0 avec le plasma 5 formé à la surface de la cible solide 3. La durée des impulsions de structuration 4 est de quelques femtosecondes et leur puissance instantanée relève du Terawatt. La source laser 2 peut typiquement produire des impulsions de structuration 4 de 100 TW et 25 fs, avec une fréquence de répétition de 10 Hz. Les impulsions de structuration 4 présentent une durée temporelle inférieure à 1 picoseconde. Dans l'exemple particulier décrit en lien avec la figure 2, les impulsions de structuration 4 présentent une durée temporelle de 25 fs. Un système d'amplification CPA (de l'anglais « Chirped Pulse Amplification ») peut typiquement être utilisé afin de générer les impulsions de structuration 4. La fluence requise pour les impulsions de structuration 4 à la surface de la cible solide 3 est typiquement de l'ordre de 1 à quelques dizaines de J/cm$^2$. Cette fluence dépend notamment du matériau choisi pour la cible solide 3. D'une manière générale, la fluence des impulsions de structuration 4 à la surface de la cible solide 3 est telle que le seuil de dommage laser de la cible solide 3 est atteint. La source laser 2 présente avantageusement un contraste temporel élevé, préférentiellement supérieur ou égal à 10$^{10}$ sur une échelle de temps comprise entre 10 ps et 1000 ps. En première approximation, la forme temporelle de chaque impulsion de structuration 4 peut être considérée comme gaussienne. En réalité, elle est généralement accompagnée d'un pied d'impulsion, également appelé « piédestal », et de pré-impulsions laser caractéristiques des systèmes CPA. Le pied de l'impulsion laser est principalement dû au phénomène d'amplification de l'émission spontanée ASE (de l'anglais « Amplified Spontaneous Emission »). Lors de l'amplification des impulsions de structuration 4, le milieu amplificateur est pompé afin d'obtenir une inversion de la population atomique. Cette inversion de population donne lieu à une émission spontanée, qui est ensuite amplifiée et émise à la fréquence de lasage du milieu amplificateur. On entend par « lasage » un phénomène de libération d'une énergie, précédemment accumulée dans un milieu actif par pompage, sous forme d'une impulsion de lumière cohérente. Si l'intensité du piédestal est suffisante, le piédestal risque d'interagir avec la cible solide 3 et de générer un plasma avant l'arrivée de l'impulsion de structuration 4, modifiant ainsi les conditions d'interaction. On définit donc le contraste laser par la différence d'intensité entre ce piédestal et l'impulsion de structuration 4. Afin de s'affranchir au maximum de l'influence du piédestal et d'optimiser le contraste laser de la source laser 2, différentes techniques peuvent être mises en oeuvre, parmi lesquelles :

- la technique de génération de polarisation croisée XPW (de l'anglais « Cross Polarization Wave »), gouvernée par la partie réelle de la susceptibilité non linéaire du troisième ordre de matériaux cristallins, tels que le fluorure de baryum. La traversée d'un tel cristal par une impulsion laser incidente génère une impulsion laser de même longueur d'onde, de polarisation croisée et d'intensité proportionnelle au cube de l'intensité de l'impulsion incidente. Cette dépendance avec le cube de l'intensité permet ainsi d'améliorer le contraste d'une impulsion laser. Cette technique peut également être utilisée avec deux cristaux à la suite, avec une efficacité de conversion pouvant atteindre 25% pour un contraste amélioré d'un facteur $10^3$.

- La technique du miroir plasma, basée sur la propriété qu'a un plasma à la densité critique de réfléchir une onde électromagnétique. Une impulsion laser est par exemple focalisée en amont de la surface d'une lame de verre dotée d'un traitement antireflet. Lorsque l'impulsion laser se propage, elle est précédée de son piédestal. Le piédestal est transmis à travers la lame de verre. Lors du passage du piédestal à l'impulsion laser, l'intensité augmente jusqu'à être suffisante pour ioniser la lame de verre et générer un plasma. L'impulsion laser peut alors se réfléchir sur ce plasma, avec un coefficient de réflexion typiquement compris entre 65% et 85% selon les configurations. L'impulsion laser est donc nettoyée de son piédestal, mais atténuée. Son contraste est typiquement amélioré d'un facteur $10^2$. La technique de miroir plasma peut également être utilisée sous forme de double miroir plasma, pour un contraste augmenté d'un facteur $10^4$ au prix d'une atténuation supérieure. Dans l'exemple particulier présentement décrit en lien avec la figure 2, la technique de double miroir plasma est utilisée.

La focalisation des impulsions de structuration 4 de haute intensité sur la cible solide 3 est typiquement réalisée au moyen d'une parabole de focalisation hors-axe. Afin de pouvoir focaliser au mieux les impulsions laser, l'utilisation de grandes ouvertures est préférable. Il est également envisageable de focaliser les impulsions de structuration 4 au moyen de lentilles.

La cible solide 3 peut être réalisée dans un grand nombre de matériaux différents, comme par exemple de la silice, l'aluminium, du carbone, du plastique. Dans l'exemple particulier décrit en lien avec la figure 2, la cible solide 3 est en silice. La cible solide 3 s'étend suivant un plan de référence, typiquement sur une surface minimum de l'ordre de 10 $\mu m^2$. Dans l'exemple particulier décrit en lien avec la figure 2, la cible solide 3 est de forme rectangulaire et présente une largeur de 2,5 cm et une longueur de 5 cm. La cible solide 3 présente avantageusement une surface importante, de l'ordre de quelques $cm^2$, afin de pouvoir réaliser plusieurs structurations spatiales successives sur une même cible solide. La cible solide 3 présente une épaisseur typiquement comprise entre quelques $\mu m$ et quelques mm, et au minimum de l'ordre de quelques nm, dans le cas de feuilles minces. Dans l'exemple particulier décrit en lien avec la figure 2, la cible solide 3 présente ainsi une épaisseur de 5 mm. L'épaisseur de la cible solide 3 est mesurée suivant une direction perpendiculaire au plan de référence.

Lors de l'interaction de la cible solide 3 avec une impulsion de structuration 4 intense de la source laser 2, il se produit en premier lieu un phénomène d'ionisation de la cible solide 3.

On choisit le régime d'intensité de la source laser 2 afin d'assurer l'ionisation très rapide, quasiment instantanée de la cible solide 3. En pratique, pour une cible solide 3 en silice, cela correspond typiquement à une intensité I à la surface de ladite cible solide 3 telle que :

$$I \geq 1.10^{14}\ W.cm^{-2}$$

Lors de l'irradiation de la cible solide 3 par une impulsion de structuration 4, il se produit un chauffage inhomogène de la cible solide 3, en raison de la mise en forme spatiale de la fluence de l'impulsion de structuration 4. Le régime d'intensité de la source laser 2 étant choisi afin d'assurer l'ionisation instantanée de la cible solide 3, un plasma 5 commence immédiatement à se former à la surface de la cible solide 3. Ce plasma 5 croît et se dilate hydrodynamiquement vers le vide. Il est théoriquement possible de distinguer, dans l'évolution du plasma 5 :

- une première phase de formation et de chauffage du plasma 5, contrôlées par l'impulsion de structuration 4. Durant cette première phase, l'expansion du plasma 5 reste très faible, du fait de la faible durée de la ou des impulsions de structuration 4.
- puis une deuxième phase d'expansion libre du plasma 5.

Une étude de la dépendance de la vitesse d'expansion du plasma 5 en fonction de la fluence de l'impulsion de structuration 4, que nous détaillerons ultérieurement, permet d'affirmer que la vitesse d'expansion du plasma 5 dépend de la fluence de l'impulsion de structuration 4. Ainsi, une structure spatiale peut être induite dans un plasma 5 à la surface d'une cible solide 3 initialement plane, préalablement à l'arrivée de l'impulsion principale P0 intense, en irradiant la cible solide 3 avec une impulsion de structuration 4, dite aussi « pré-impulsion », spatialement structurée de fluence $F(x) = F_0 f(x)$, où x est une dimension spatiale de la cible solide 3, $F_0$ est la valeur maximale de la fluence, et f(x) est la fonction décrivant l'évolution spatiale de la fluence, à un délai variable $\tau$ avant l'impulsion principale P0 intense. La dépendance de la vitesse d'expansion $C_S$ du plasma 5 avec la fluence F de l'impulsion de structuration 4 conduit alors à la croissance progressive dans le temps d'une modulation spatiale du plasma 5 sur-dense (« overdense plasma ») à la surface de la cible solide 3. Avec l'approche de l'invention, une manière efficace d'obtenir des structures spatiales très fines, potentiellement inférieures à $\lambda/2$, dans un plasma 5 est d'utiliser les interférences spatiales de plusieurs impulsions de structuration 4 afin d'obtenir une mise en forme de la fluence à la surface de la cible solide 3.

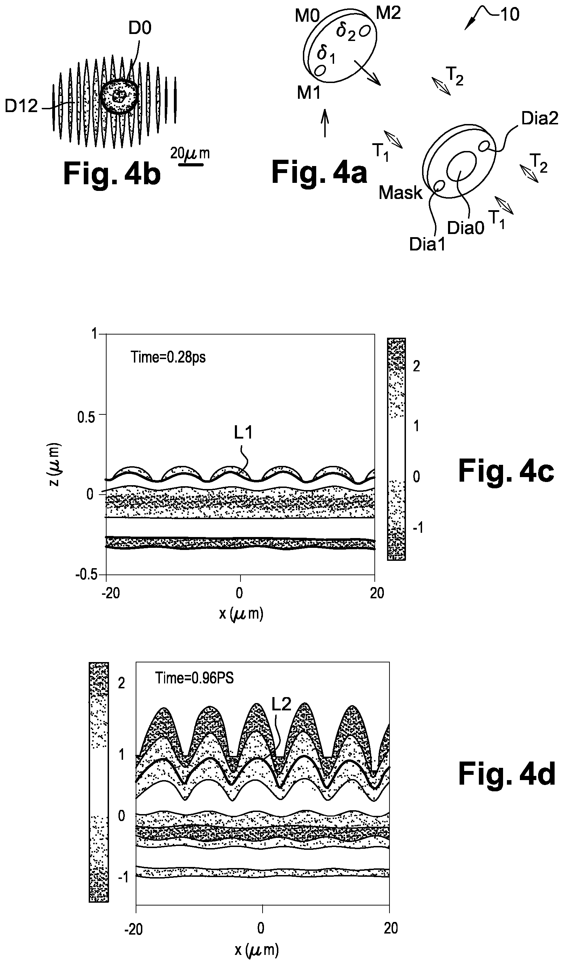

La figure 4a montre un dispositif 10 permettant de faire interférer deux impulsions de structuration 4, dites « pré-impulsions », synchronisées sur la cible solide 3. Le dispositif 10 comporte ainsi un premier miroir M1 et un deuxième miroir M2, présentant chacun un diamètre de 10 mm et placés sur deux côtés diamétralement opposés du faisceau laser de la source laser 2, le faisceau laser de la source laser 2 ayant un diamètre environ égal à 80 mm. Les premier et deuxième miroirs M1 et M2 s'étendent suivant un même plan sensiblement parallèle au plan d'un miroir principal M0. Le premier miroir M1 permet de contrôler le temps d'arrivée sur la cible solide de chaque pré-impulsion d'un premier sous-faisceau de pré-impulsions P1 (référencé pour une meilleure compréhension mais non représenté à la figure 4a). Le deuxième miroir M2 permet de contrôler le temps d'arrivée sur la cible solide de chaque pré-impulsion d'un deuxième sous-faisceau de pré-impulsions P2 (référencé pour une meilleure compréhension mais non représenté à la figure 4a). Le miroir principal M0 permet de contrôler le temps d'arrivée sur la cible solide de chaque impulsion d'un faisceau principal d'impulsions P0 (non représenté à la figure 4a mais représenté à la figure 2). Le dispositif 10 comporte un masque présentant un diaphragme principal DiaO pour le faisceau principal d'impulsions PO, et des premier et deuxième diaphragmes Dia1 et Dia2, respectivement utilisés pour les premier et deuxième sous-faisceaux de pré-impulsions P1 et P2. Dans l'exemple de montage interférentiel illustré à la figure 4a, les premier et deuxième sous-faisceaux de pré-impulsions P1 et P2 sont ainsi formés en plaçant les premier et deuxième miroirs M1 et M2 entre la source laser 2 et le miroir principal M0, afin de raccourcir le chemin optique des pré-impulsions P1 et P2. En plaçant les premier et deuxième miroirs M1 et M2 à l'endroit, c'est-à-dire en présentant une face métallisée desdits miroirs M1 et M2 au faisceau incident, on contribue à obtenir un décalage temporel relativement long entre les pré-impulsions P1 et P2 d'une part, et l'impulsion principale P0 d'autre part En plaçant au contraire les premier et deuxième miroirs M1 et M2 à l'envers, c'est-à-dire en présentant une face en verre desdits miroirs M1 et M2 au faisceau incident, on contribue à obtenir un décalage temporel relativement plus court que dans le cas précédent, voire un décalage temporel nul. C'est naturellement ce dernier cas, permettant d'atteindre un décalage temporel nul, qui présente le plus grand intérêt. Les premier et deuxième sous-faisceaux sont ensuite focalisés sur la cible solide 3, ici en silice, par un même miroir parabolique hors axe (non représenté) et se croisent sous un angle sur la cible solide 3, où ils interfèrent, engendrant un motif d'intensité de la tache focale. La figure 4b montre ainsi la distribution d'intensité D12 du motif d'interférence à la surface de la cible solide 3 d'une première pré-impulsion P1 et d'une deuxième pré-impulsion P2 parfaitement synchronisées, ainsi que la distribution d'intensité D0 d'une impulsion P0 du faisceau principal. La distribution d'intensité D12 présente des franges d'interférence dont la période d est donnée par la relation : $d = \lambda f / D_p$, avec $\lambda$ la longueur d'onde des pré-impulsions P1 et P2, $D_P$ la distance entre les premier et deuxième miroirs M1 et M2, et f la distance focale de l'optique de focalisation. La période d des franges d'interférence peut donc être modifiée par n'importe lequel de ces trois paramètres. La distance $D_P$ entre les premier et deuxième miroirs M1 et M2 est le paramètre de contrôle le plus direct. Dans l'exemple de réalisation que nous décrivons ici, la limite supérieure de la distance $D_P$ est déterminée par la taille du faisceau laser de la source laser 2, ce qui impose que la plus petite période d que l'on peut atteindre dans cet exemple est de 7 μm, pour une distance $D_p$ de 55 mm entre les premier et deuxième miroirs M1 et M2, une distance focale f de 500 mm et une longueur d'onde À des pré-impulsions P1 et P2 de 800 nm. Le pic de fluence de chaque pré-impulsion P1 et P2 sur la cible solide est suffisamment élevé pour générer un plasma 5 dense à la surface de la cible solide 3 en silice. En l'occurrence, ce pic de fluence est de l'ordre de $1,7 \times 10^2$ J/cm$^2$. Le faible diamètre des sous-faisceaux de pré-impulsions P1 et P2 assure que chaque pré-impulsion génère une tache focale bien plus importante que celle du faisceau principal, permettant ainsi à l'impulsion principale P0 d'interagir avec un réseau de plasma uniforme. Dans le cas d'une focalisation limitée par la diffraction, le nombre N de périodes du réseau illuminées par l'impulsion principale P0 est estimé par la relation : $N = D_P/D$, où D est le diamètre du diaphragme DiaO utilisé pour l'impulsion principale P0.

Des simulations hydrodynamiques ont été menées afin d'étudier la structure plasma résultant d'une telle distribution D12 d'intensité. Pour un espacement d des franges typiquement de l'ordre du μm, des vitesses d'expansion $C_S$ de l'ordre de 30 nm/ps et pour un délai $\tau$ entre l'impulsion principale P0 et les première et deuxième pré-impulsions P1 et P2 tel que $\tau \ll 30$ ps, la relation suivante s'applique : $L(\tau) = C_S \tau \ll d$, ce qui permet de considérer que les effets hydrodynamiques à deux dimensions sont négligeables. Ainsi, pour les délais $\tau \ll 3$ ps utilisés dans l'exemple de réalisation présentement décrit, on peut considérer de manière sûre que l'expansion hydrodynamique est unidimensionnelle. Des simulations ESTHER à une dimension ont ainsi été réalisées (voir par exemple la référence J. P. Colombier et al., Phys. Rev. B 74, 224106 (2006)), pour différentes fluences F de laser comprises entre 0 et $F_0$ afin de déterminer la carte $n_e(x,z,\tau)$ de la densité électronique du plasma 5 en fonction du temps dans ce régime. Ceci a permis d'obtenir une pluralité de profils de densité unidimensionnels $n_e^{1D}(F, z, \tau)$ à des temps $\tau$, à partir desquels la structure bidimensionnelle du plasma 5 modulé peut être déduite grâce à la relation : $n_e(x, z, \tau) = n_e^{1D}(F_0 f(x), z, \tau)$. Deux profils de densité $n_e(x,z,\tau)$ pour le réseau de plasma structuré, obtenus respectivement pour un premier délai de 0,28 ps et un deuxième délai de 0,96 ps après l'arrivée des première et deuxième pré-impulsions P1 et P2 sur la cible solide 3, sont ainsi représentés aux figures 4c et 4d. La figure 4c montre en particulier une première ligne L1 d'isodensité, pour une densité n du plasma 5 égale à la densité critique $n_c$, à un délai de 0,28 ps après l'irradiation de la cible solide par les première et deuxième pré-impulsions P1 et P2. La figure 4d montre une deuxième ligne L2 d'isodensité, pour une densité n du plasma 5 égale à la densité critique $n_c$, à un délai de 0,96 ps après l'irradiation de la cible solide 3 par les première et deuxième pré-impulsions P1 et P2. Nous observons que la variation de fluence dans le plan focal donne naissance à des modulations périodiques de la surface de densité critique, respectivement indiquée sur les figures 4c et 4d par les première et deuxième lignes d'isodensité L1 et L2, et du gradient densité de la longueur d'échelle L le long de la surface de la cible. Le réseau de plasma conserve la périodicité de la modulation d'intensité exercée par la pré-impulsion, en l'occurrence par les première et deuxième pré-impulsions P1 et P2, et se dilate dans le temps, autorisant ainsi un contrôle de la profondeur du réseau de plasma et de sa périodicité, respectivement grâce au délai temporel et à la configuration de focalisation choisis.

Nous décrivons à présent un exemple particulier de formation et de contrôle du réseau de plasma 5. Une portion centrale du faisceau de la source laser 2, présentant un diamètre ajustable D, est utilisée afin de produire une impulsion principale PO, qui est focalisée sur la cible solide 3 en utilisant la même optique de focalisation que celle utilisée pour les première et deuxième pré-impulsions P1 et P2. L'impulsion principale P0 interagit avec le plasma 5 structuré créé par les première et deuxième pré-impulsions P1 et P2, agissant ainsi comme une sonde de haute intensité. Le délai $\tau$ entre l'impulsion principale P0 et les première et deuxième pré-impulsions P1 et P2, exprimé par : $\tau = (\tau_1 + \tau_2)/2$, et le délai $\tau'$ entre les première et deuxième pré-impulsions P1 et P2, exprimé par : $\tau' = \tau_1 - \tau_2$, sont ajustables. $\tau_1$ désigne le délai entre la première pré-impulsion P1 et l'impulsion principale PO, et $\tau_2$ désigne le délai entre la deuxième pré-impulsion P2 et l'impulsion principale P0. Les première et deuxième pré-impulsions P1 et P2 sont respectivement réfléchies depuis la face arrière des premier et deuxième miroirs M1 et M2, afin que le temps de propagation de groupe accumulé dans le substrat en verre permette d'obtenir $\tau = 0$.

Afin de visualiser l'existence d'un tel réseau de plasma 5 et de vérifier que la structure résiste lorsqu'elle est exposée à de hautes intensités, la génération d'harmoniques d'ordres élevés HHG (de l'anglais « High Harmonic Génération »), qui survient lorsque l'impulsion principale P0 interagit avec le réseau de plasma, a été étudiée. La génération HHG peut être causée par deux mécanismes bien identifiés, qui sont :

- l'émission cohérente de sillage CWE (de l'anglais « Coherent Wake Emission »), et
- le phénomène du miroir relativiste oscillant ROM (de l'anglais « Relativistic Oscillating Mirror »).

Le poids relatif de ces deux mécanismes dépend des conditions d'interaction. On s'attend intuitivement à ce que la génération HHG survenant sur le réseau de plasma 5 résulte en un motif de diffraction sur le faisceau d'harmoniques en champ lointain, ce qui, en raison des courtes longueurs d'onde de ces harmoniques, constitue une sonde très sensible du réseau de plasma 5.

Afin d'observer ce motif de diffraction, le faisceau d'harmoniques est spectralement dispersé au moyen d'un réseau concave pour rayonnement ultraviolet extrême, à 1200 lignes/mm et espacement variable des lignes. On obtient ainsi des spectres d'harmoniques angulairement résolus $S(\omega,\theta)$, qui peuvent par exemple être détectés en utilisant une galette de microcanaux couplée à un écran à phosphore et imagée sur une caméra CCD. On utilise dans cet exemple particulier de réalisation une galette de microcanaux rectangulaire de 69 mm par 88 mm. La fente d'un spectromètre XUV est orientée dans le plan des deux pré-impulsions P1 et P2 qui interfèrent, afin que le motif de diffraction induit par le réseau de plasma 5 puisse être mesuré pour chaque harmonique individuelle.

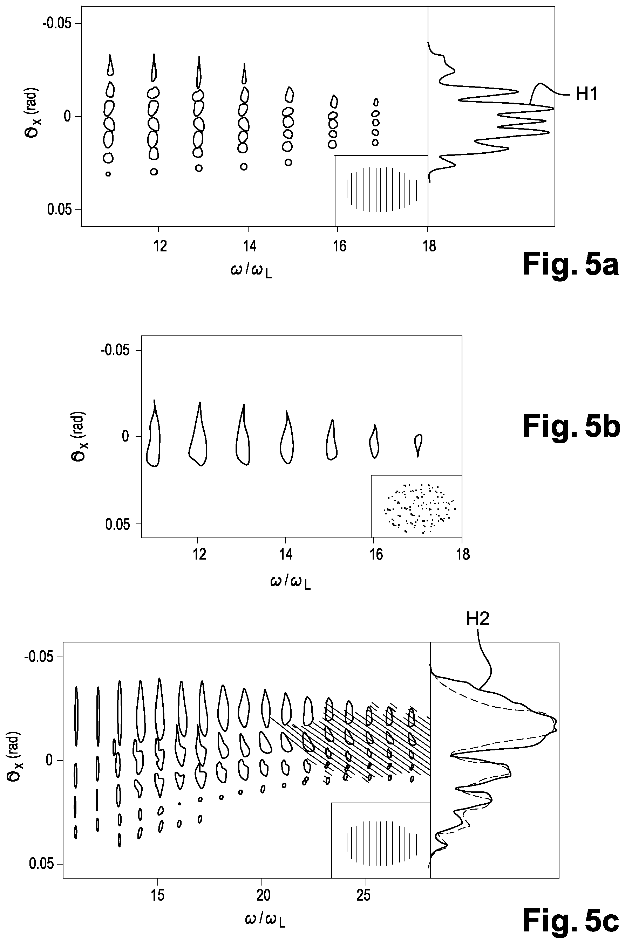

Une première série de manipulations a ainsi été réalisée sur des harmoniques CWE, qui sont typiquement générées à des intensités modérées, de l'ordre de $10^{16}$ W/cm$^2$, et lorsque le profil de densité à la surface du plasma est « raide » (on parle en anglais de « sharp plasma »), c'est-à-dire lorsque la longueur de gradient L définie précédemment est petite, c'est-à-dire typiquement inférieure à $\lambda/20$. La figure 5a montre un spectre d'harmoniques CWE résolu angulairement, pour un délai $\tau'$ nul entre les première et deuxième pré-impulsions P1 et P2, ce qui correspond au contraste maximum du réseau de plasma, et pour un délai $\tau$ de 0,35 ps entre l'impulsion principale P0 et les première et deuxième pré-impulsions P1 et P2. Un diaphragme relativement petit, de 2 cm de diamètre, est utilisé pour obtenir l'impulsion principale P0 et on obtient dans cette configuration un nombre N de franges dans la tâche focale de l'impulsion principale P0 de l'ordre de 5. La figure 5b montre un spectre d'harmoniques CWE résolu angulairement, pour un délai $\tau' > \tau_C$ entre les première et deuxième pré-impulsions P1 et P2 avec $\tau_C$ le temps de cohérence, ce qui correspond à une absence de réseau de plasma, et pour un délai $\tau$ de 0,35 ps entre l'impulsion principale P0 et les première et deuxième pré-impulsions P1 et P2. Les spectres des figures 5a et 5b ont été acquis pour une intensité maximale de l'impulsion principale $I_{max} = 2 \times 10^{16}$ $W/cm^2$ et pour un gradient court de densité de plasma de l'ordre de $\lambda/50$. Lorsque le délai $\tau'$ entre les première et deuxième pré-impulsions P1 et P2 augmente, le motif de diffraction s'évanouit progressivement, jusqu'à complètement disparaître lorsque le délai $\tau'$ devient supérieur au temps de cohérence $\tau_C$ des pré-impulsions P1 et P2, c'est-à-dire lorsque les deux pré-impulsions P1 et P2 cessent d'interférer. Nous montrons ainsi que le motif de diffraction observé résulte bien de l'expansion du plasma modulé, elle-même déclenchée par les pré-impulsions P1 et P2 interférant spatialement. La courbe H1 représentée à la figure 5a correspond à la douzième harmonique du spectre d'harmoniques de la figure 5a.

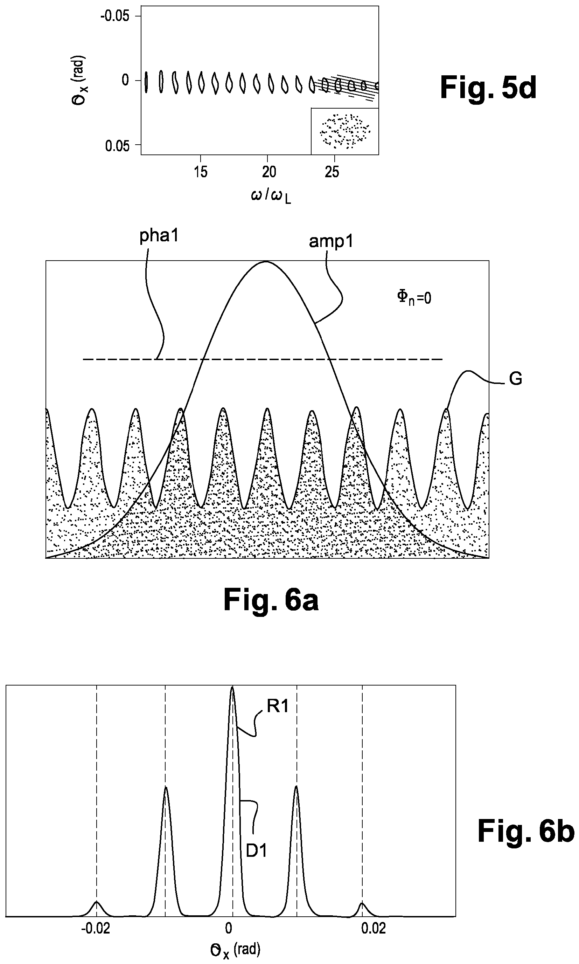

De nombreux domaines de recherche, tels que l'accélération laser de particules, impliquent des champs encore plus importants que ceux mis en oeuvre pour générer des harmoniques CWE. On expose à présent un réseau de plasma à un champ encore plus intense, en étudiant des harmoniques ROM. Les harmoniques ROM sont générées pour des intensités relativistes supérieures à $10^{18}$ W/cm$^2$ et pour des gradients de densité de plasma plus longs, correspondants à de plus grands délais $\tau$ entre l'impulsion principale P0 et les première et deuxième pré-impulsions P1 et P2. La figure 5c montre ainsi un spectre d'harmoniques ROM résolu angulairement, pour un délai $\tau'$ nul entre les première et deuxième pré-impulsions P1 et P2, ce qui correspond au contraste maximum du réseau de plasma, et pour un délai $\tau$ de 0,96 ps entre l'impulsion principale P0 et les première et deuxième pré-impulsions P1 et P2. Comparativement au cas des harmoniques CWE, précédemment décrit en lien avec les figures 5a et 5b, une plus grande intensité est désormais nécessaire pour l'impulsion principale P0 afin de générer des harmoniques ROM. Cette plus grande intensité de l'impulsion principale P0 est obtenue en utilisant, pour l'impulsion principale PO, un diaphragme de diamètre plus important, ce qui se traduit alors par un plus petit nombre N de franges - de l'ordre de 2 - dans la tâche focale de l'impulsion principale P0. La figure 5d montre un spectre d'harmoniques ROM résolu angulairement, pour un délai $\tau' > \tau_C$ entre les première et deuxième pré-impulsions P1 et P2 avec $\tau_C$ le temps de cohérence, ce qui correspond à une absence de réseau de plasma, et pour un délai $\tau$ de 1,18 ps entre l'impulsion principale P0 et les première et deuxième pré-impulsions P1 et P2. Les spectres des figures 5a et 5b ont été acquis pour une intensité maximale de l'impulsion principale $I_{max} = 1 \times 10^{18}$ $W/cm^2$ et pour un gradient long de densité de plasma de l'ordre de $\lambda/20$. La courbe H2 représentée à la figure 5c correspond à la douzième harmonique du spectre d'harmoniques de la figure 5c. La figure 5d, pour laquelle $\tau' > \tau_C$, montre que l'effet du délai relatif entre les première et deuxième pré-impulsions P1 et P2 dans le cas des harmoniques ROM est similaire à l'effet observé pour $\tau' > \tau_C$ dans le cas des harmoniques CWE, illustré à la figure 5b. L'origine du motif de diffraction est ainsi confirmée. Cette deuxième série de manipulations avec une intensité relativiste démontre clairement que le réseau de plasma formé par les première et deuxième pré-impulsions P1 et P2 résiste à l'interaction avec l'impulsion principale PO, malgré l'intensité élevée de l'impulsion principale PO, rendant ledit réseau de plasma tout à fait adapté à de nombreuses applications en champ intense.

Nous revenons maintenant sur l'étude de la dépendance de la vitesse d'expansion du plasma 5 en fonction de la fluence de l'impulsion de structuration 4, mentionnée précédemment. Cette dépendance a donc été mesurée pour une cible solide 3 en silice polie exposée à une impulsion de structuration 4 de 25 fs et pour une fluence variant entre 100 et 350 J/cm$^2$. L'expansion du plasma a été mesurée grâce au décalage de phase induit sur une impulsion de sonde de fluence relativement faible, de l'ordre de $1,5 \times 10^{-4} J/cm^2$. Ce décalage de phase a été mesuré en utilisant l'interférométrie de Fourier résolue en temps (time-resolved Fourier-domain interferometry).

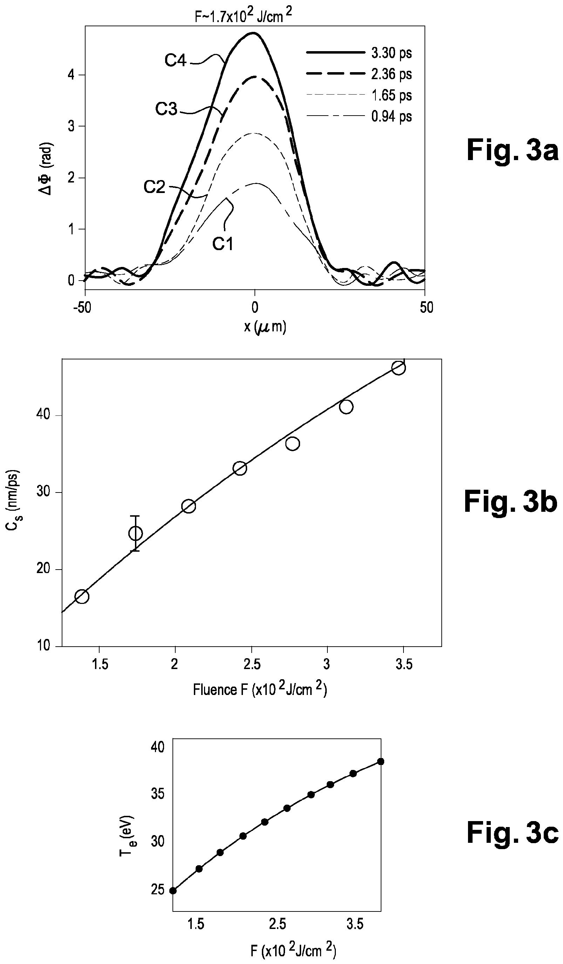

La figure 3a montre le profil spatial de ce décalage de phase sur la tache focale de l'impulsion de sonde, pour quatre délais différents après l'impulsion de structuration 4 :

- la courbe C1 correspond à un délai de 0,94 ps après l'impulsion de structuration 4 ;
- la courbe C2 correspond à un délai de 1,65 ps après l'impulsion de structuration 4 ;
- la courbe C3 correspond à un délai de 2,36 ps après l'impulsion de structuration 4 ;
- la courbe C4 correspond à un délai de 3,30 ps après l'impulsion de structuration 4.

La figure 3a montre donc l'évolution du décalage de phase $\Delta\varphi$, exprimé en rad, en fonction d'une dimension spatiale r de la tache focale de l'impulsion de sonde, exprimée en $\mu$m. Le décalage de phase $\Delta\varphi$ est induit sur l'impulsion de sonde par l'expansion plasma initialement déclenchée, par exemple par une impulsion de structuration 4 de fluence de l'ordre de $1,7 \times 10^2 J/cm^2$.

On suppose, par souci de simplicité, que la densité n du plasma 5 en expansion présente un profil exponentiel : $n \propto exp(-x/L(-\tau))$. On peut alors déduire la longueur d'échelle du gradient de densité $L(\tau)$ à partir du décalage de phase mesuré pour un délai $\tau$, et la vitesse d'expansion $C_S = dL/d\tau$ à partir de l'évolution temporelle de $L(\tau)$. En réalisant ces mesures pour différentes énergies de l'impulsion de structuration 4, on obtient l'évolution, illustrée à la figure 3b, de la vitesse d'expansion $C_S$ en fonction de la fluence F de l'impulsion de structuration 4. La vitesse d'expansion $C_S$ est exprimée en nm/ps. La fluence F de l'impulsion de structuration 4, mesurée au centre de l'interaction de la pré-impulsion avec la cible solide, est exprimée en J/cm$^2$. Au-delà du seuil requis pour entraîner la formation du plasma 5 à la surface de la cible solide 3, la vitesse d'expansion $C_S$ présente une dépendance quasi-linéaire avec la fluence de l'impulsion de structuration 4. Des simulations hydrodynamiques, réalisées avec le code ESTHER 1D pour des conditions comparables à celles de la présente expérience, montrent que cette variation de la vitesse d'expansion $C_S$ peut principalement être attribuée à une augmentation de la température électronique $T_e$ avec la fluence F de l'impulsion de structuration 4, due à l'augmentation de l'énergie laser absorbée. La figure 3c montre ainsi un graphique de l'évolution de la température électronique $T_e$, exprimée en eV, en fonction de la fluence F de l'impulsion de structuration 4, exprimée en J/cm$^2$. Ces manipulations montrent donc qu'une structure spatiale peut être induite dans un plasma 5 à la surface d'une cible solide 3 initialement plane, préalablement à l'arrivée d'une impulsion principale P0 intense, en irradiant la cible solide 3 avec au moins une impulsion laser de structuration 4, dite « pré-impulsion », spatialement structurée. Ces manipulations montrent également que la structuration spatiale résiste durant son interaction avec l'impulsion laser principale PO, malgré une intensité très élevée pour ladite impulsion laser principale P0. Le plasma 5 spatialement structuré à la surface de la cible solide 3, obtenu grâce au procédé de l'invention, est donc tout à fait adapté pour diverses applications en champ intense, comme par exemple le couplage de champs lasers ultra-intenses avec des plasmons de surface, ou encore le développement de nouvelles méthodes de mesures d'interactions laser-plasma, que nous détaillons ci-après. Nous avons précédemment décrit l'utilisation d'un faisceau harmonique en tant que sonde d'un réseau de plasma. Réciproquement, un réseau de plasma peut être utilisé en tant que sonde spatiale d'une source harmonique, afin de déterminer les propriétés spatiales de ladite source harmonique dans le plan de la cible - à la surface de laquelle se trouve le réseau de plasma. Dans ce cas de figure, on connaît les propriétés spatiales de la source laser initiale, mais on ne connaît pas les propriétés spatiales de la source harmonique : généralement, les propriétés spatiales de la source harmonique sont différentes de celles de la source laser initiale. Dans le cas de génération d'harmoniques d'ordres élevés HHG à partir de plasmas, le champ harmonique dans le plan de la source peut se révéler non-trivial, en particulier à cause de la dépendance de l'amplitude et de la phase harmoniques avec l'intensité laser, qui résulte de la physique du procédé de génération. Pour des harmoniques d'ordre $n \gg 1$, le champ harmonique $h_n(x)$ d'ordre n n'est pas accessible simplement par des expériences usuelles - ni en phase, ni en amplitude, notamment en raison de la difficulté de réaliser des optiques adaptées à cet intervalle spectral. Ce qui peut simplement être mesuré, c'est typiquement : $|H_n(k)|^2$, avec $H_n(k) = TF(h_n(x))$ le champ harmonique après sa propagation jusqu'à un détecteur en champ lointain. Déterminer $h_n(x)$ à partir de cette mesure est alors essentiellement un problème de détermination de phase, puisque la connaissance de la phase de $H_n(k)$ est requise afin de pouvoir réaliser une transformée de Fourier inverse pour obtenir $h_n(x)$. Diffracter une source harmonique sur un réseau de périodicité adaptée offre une solution intéressante à ce problème standard. En induisant une modulation de périodicité connue sur la source harmonique produite par l'impulsion principale, les réseaux de plasmas peuvent être utilisés comme une « règle spatiale » afin de lever l'indétermination associée aux mesures d'intensité en champ lointain. Nous considérons que le réseau de plasma agit comme une petite perturbation dans le processus de génération HHG : le n$^{\text{ième}}$ champ harmonique $h_n^g(x)$ dans le plan de la cible en présence du réseau plasma peut s'exprimer comme : $h_n^g(x) = h_n(x) \times g(x)$, la fonction complexe g(x) décrivant les modulations d'amplitude et de phase périodiques induites par le réseau plasma sur la source harmonique. Le motif de diffraction spatiale du faisceau harmonique sur un détecteur en champ lointain est alors donné par la relation :

$$S_n(k) = \left|TF\left(h_n^g(x)\right)\right|^2 = |H_n(k) \otimes G(k)|^2$$

Le motif de diffraction spatiale du faisceau harmonique sur un détecteur en champ lointain est donc la convolution du faisceau harmonique non perturbé en champ lointain, $H_n(k)$, et de la transformée de Fourier $G(k)$ de g(x), qui consiste essentiellement en une série de quelques pics de Bragg espacés de $2\pi/\lambda_g$. Le détecteur en champ lointain comprend typiquement des galettes de micro-canaux couplées à un écran phosphore imagé par une caméra CCD.

La figure 6a montre des profils de phase pha1 et d'amplitude amp1 d'une première source non perturbée de type $h_n(x)$, modulée par un réseau sinusoïdal plasma G. La figure 6b montre des premières répliques R1 multiples en champ lointain du faisceau harmonique non perturbé de type $|H_n(k)|^2$, induites par le réseau sinusoïdal plasma G, et dont la combinaison produit un premier motif de diffraction total D1 qui est mesuré expérimentalement.

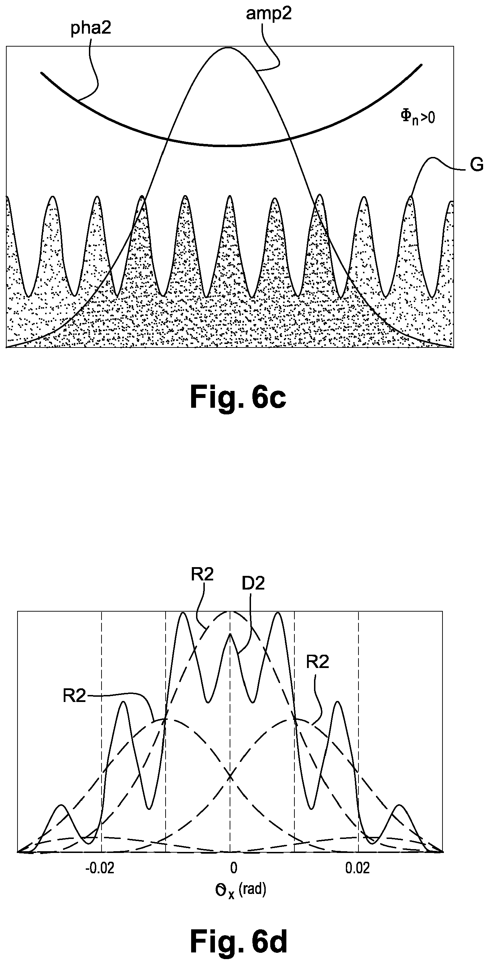

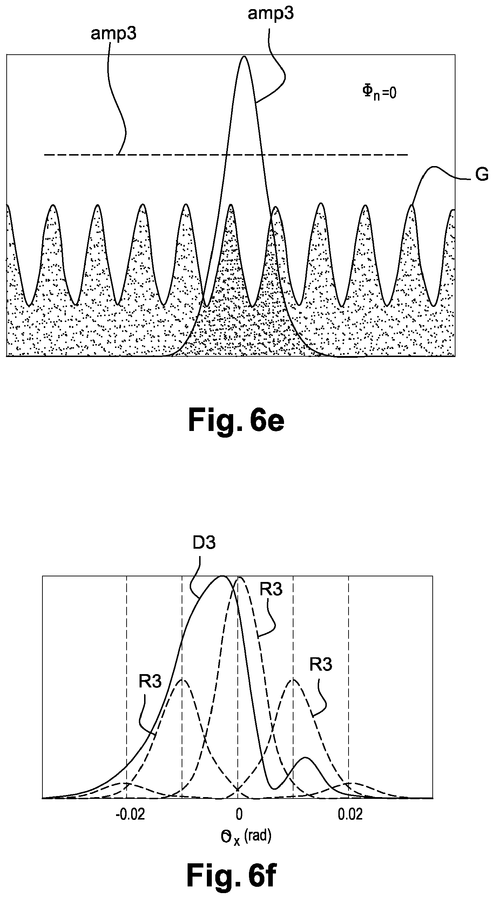

De manière analogue, la figure 6c montre des profils de phase pha2 et d'amplitude amp2 d'une deuxième source non

perturbée de type $h_n(x)$, modulée par le réseau sinusoïdal plasma G. La figure 6d montre des deuxièmes répliques R2 multiples en champ lointain du faisceau harmonique non perturbé de type $|H_n(k)|^2$, induites par le réseau sinusoïdal plasma G, et dont la combinaison produit un deuxième motif de diffraction total D2 qui est mesuré expérimentalement. Enfin, la figure 6e montre des profils de phase pha3 et d'amplitude amp3 d'une troisième source non perturbée S3 de type $h_n(x)$, modulée par le réseau sinusoïdal plasma G. La figure 6f montre des troisièmes répliques R3 multiples en champ lointain du faisceau harmonique non perturbé de type $|H_n(k)|^2$, induites par le réseau sinusoïdal plasma G, et dont la combinaison produit un troisième motif de diffraction total D3 qui est mesuré expérimentalement.

Le réseau plasma permet donc de générer des répliques spatialement décalées de $H_n(k)$ sur le détecteur en champ lointain. Deux régimes distincts peuvent être identifiés, selon que l'espacement entre les répliques est plus grand ou plus petit que la largeur du faisceau harmonique non perturbé $H_n(k)$. Dans le premier cas, illustré aux figures 6a et 6b, et qui est le plus courant, les répliques sont bien séparées. Le motif de diffraction n'apporte donc aucune nouvelle information sur $H_n(k)$. En comparaison, le second cas, illustré aux figures 6c à 6f, est qualitativement similaire à l'interférométrie à décalage (« shearing interferometry »). Les répliques spatialement décalées de $H_n(k)$ se recouvrent et interfèrent, et le motif d'interférence résultant est déterminé par la phase de $H_n(k)$. Dans ce second cas, une mesure de ce motif d'interférence, ou motif de diffraction, procure donc l'information de phase de $H_n(k)$, qui est généralement manquante pour déterminer $h_n(x)$.

Les données expérimentales des figures 5a à 5d sont précisément issues de ce second régime, où les répliques multiples se recouvrent. Dans le cas des harmoniques CWE, cela est dû à la divergence importante du faisceau harmonique non-perturbé, résultant de la forte variation de la phase harmonique avec l'intensité laser. Dans le cas des harmoniques ROM, cela est dû au faible nombre de franges d'interférences, typiquement de l'ordre de 2, contenues dans la tache focale principale. Afin d'extraire l'information désirée de ces mesures, le motif de diffraction du faisceau harmonique a été calculé, en admettant un profil d'amplitude gaussien pour $h_n(x)$, avec une source de taille $\omega_n$ et profil de phase parabolique $\Phi_n(x) = \alpha_n x^2$. La méthode des moindres carrés a ensuite été utilisée pour ajuster le motif de diffraction calculé aux données expérimentales et déterminer les valeurs de $\omega_n$ et du coefficient $\alpha_n$. Les courbes H1 et H2, respectivement représentées aux figures 5a et 5c, sont le résultat d'un tel ajustement, et montrent une concordance remarquable entre les motifs de diffraction calculés et les données expérimentales. En définissant $\omega_0$ comme étant la taille de la tâche focale de l'impulsion laser principale, on obtient une taille de source $\omega_{CWE\_12} = (1 \pm 0,15)\omega_0$ pour la douzième harmonique CWE, et une taille de source $\omega_{ROM\_12} = (0,5 \pm 0,07)\omega_0$ pour la douzième harmonique ROM, ce qui est en excellent accord avec les simulations « Particle-In-Cell », décrites notamment dans la référence suivante : M. Yeung et al., Phys. Rev. Lett. 110, 165002 (2013). Les valeurs obtenues pour $\omega_n$ et $\alpha_n$ sont tout à fait compatibles avec les divergences mesurées pour les faisceaux harmoniques en l'absence de réseau de plasma. En outre, la fonction de modulation $g(x)$ du réseau de plasma correspond essentiellement à la modulation de phase, comme attendu, dont l'amplitude est compatible avec la profondeur de modulation estimée pour le réseau de plasma.

Le procédé 100 de structuration spatiale dynamique contrôlée optiquement d'un plasma sur une cible solide décrit dans le présent document permet donc de générer et de contrôler des structures spatiales modulées dans des plasmas à la surface de cibles solides. La formation de réseaux de plasma transitoires au moyen du procédé de l'invention a ainsi été décrite. Le présent document démontre que de tels réseaux de plasma transitoires résistent à des intensités relativistes, et notamment à l'envoi d'une impulsion principale intense, par exemple pour l'accélération laser de particules. Des motifs de diffraction d'harmoniques obtenues à partir de réseaux de plasma transitoires à la surface de cibles solides ont été observés pour la première fois, et exploités afin de réaliser la première caractérisation de la source harmonique dans le plan de la cible. Cette application particulière du procédé de 100 de l'invention à la mesure et la caractérisation de sources harmoniques offre une solution simple et flexible pour la caractérisation spatiale systématique de faisceaux harmoniques générés par des miroirs plasmas. Cette approche est très intéressante, notamment parce qu'actuellement, la caractérisation de sources harmoniques nécessite l'utilisation de procédés d'imagerie, qui sont non seulement complexes, mais qui peuvent aussi se révéler inadaptés : ainsi, dans le domaine de l'X-UV, il est extrêmement difficile et coûteux de fabriquer des optiques de qualité, et les détecteurs ont une résolution spatiale limitée.

Des degrés de liberté supplémentaires peuvent tout à fait être introduits dans le procédé de l'invention. La ou les impulsions de structuration peuvent par exemple être converties à des fréquences plus élevées, par exemple par génération de seconde harmonique, ou focalisées avec des optiques de longueur focale inférieure, afin d'obtenir des modulations de surface avec des fréquences spatiales supérieures. En plaçant un masque spatial dans un second faisceau laser de puissance, issu de la même source laser 2, plus de deux sous-faisceaux interférant peuvent être obtenus, afin d'introduire des plasmas de surface avec des structures plus complexes, comme par exemple des structures non-sinusoïdales, ou des structures à deux dimensions. Le procédé 100 de l'invention de structuration spatiale dynamique contrôlée optiquement d'un plasma sur une cible solide offre donc une grande flexibilité pour la structuration de plasmas, ainsi que de nombreuses nouvelles possibilités pour les applications de plasmonique à très haute intensité laser.

**Revendications**

1. Procédé (100) de structuration spatiale dynamique contrôlée optiquement d'un plasma sur une cible solide (3) comportant les étapes suivantes :

   - une première étape (101) selon laquelle on envoie, au moyen d'une source laser (2), au moins une impulsion laser (4) présentant une mise en forme spatiale, dite « impulsion de structuration », sur une première zone de la cible solide (3) ;
   - une deuxième étape (102) selon laquelle on forme un plasma (5) spatialement structuré à la surface de la première zone de la cible solide (3) au moyen de ladite au moins une impulsion de structuration (4).

2. Procédé (100) selon la revendication précédente **caractérisé en ce qu'**une unique impulsion de structuration (4) est envoyée sur la première zone de la cible solide (3) lors de la première étape (101), la mise en forme spatiale de l'unique impulsion de structuration (4) étant obtenue grâce à l'une des techniques suivantes :

   - un miroir déformable ;
   - un masque de phase ;
   - un masque d'amplitude.

3. Procédé (100) selon la revendication 1 **caractérisé en ce qu'**une pluralité d'impulsions de structuration (4) est envoyée sur la première zone de la cible solide (3) lors de la première étape (101), la pluralité d'impulsions de structuration (4) interférant à la surface de la première zone de la cible solide (3) et entraînant la formation du plasma (5) spatialement structuré à la surface de la première zone de la cible solide (3).

4. Procédé (100) selon l'une quelconque des revendications précédentes **caractérisé en ce que** la ou les impulsions de structuration (4) présentent une durée temporelle inférieure à 1 picoseconde.

5. Procédé (100) selon l'une quelconque des revendications précédentes **caractérisé en ce que** la ou les impulsions de structuration (4) présentent, à la surface de la première zone de la cible solide (3), une fluence supérieure au seuil de dommage laser du matériau de la première cible solide (3).

6. Procédé (100) selon l'une quelconque des revendications précédentes **caractérisé en ce qu'**il comporte une troisième étape (103) selon laquelle on envoie, au moyen de la source laser (2), une impulsion laser principale (PO) sur le plasma (5) spatialement structuré préalablement formé à la surface de la première zone de la cible solide (3), l'impulsion laser principale (PO) présentant un contraste temporel élevé, tel que le plasma (5) spatialement structuré préalablement formé à la surface de la première zone de la cible solide (3) n'est pas détruit par un piédestal de l'impulsion laser principale (PO), pour permettre l'irradiation effective du plasma (5) spatialement structuré par l'impulsion laser principale (PO) et l'interaction dudit plasma (5) spatialement structuré avec ladite impulsion laser principale (PO).

7. Procédé (100) selon la revendication précédente **caractérisé en ce que** le délai temporel entre la ou les impulsions de structuration (4) envoyées lors de la première étape (101) d'une part, et l'impulsion laser principale (PO) envoyée lors de la troisième étape (103) d'autre part, est inférieur à 100 picosecondes.

8. Procédé (100) selon l'une quelconque des revendications précédentes **caractérisé en ce qu'**il comporte une étape de structuration spatiale de la première zone de la cible solide (3) avec une première structure, et une étape de structuration spatiale d'une deuxième zone de la cible solide (3) avec une deuxième structure, la deuxième structure étant spatialement distincte de la première structure.

9. Procédé (100) selon la revendication précédente **caractérisé en ce que** les première et deuxième structures spatiales sont distinctes de par au moins un des paramètres suivants :

   - leur période spatiale ;
   - leur profondeur.

**Patentansprüche**

1. Optisch kontrolliertes dynamisches räumliches Strukturierungsverfahren (100) eines Plasmas auf einem festen Ziel (3), umfassend die folgenden Schritte:

    - einen ersten Schritt (101), gemäß dem mittels einer Laserquelle (2) wenigstens ein Laserimpuls (4), der eine räumliche Formgebung aufweist, bezeichnet als "Strukturierungsimpuls" auf einen ersten Bereich des festen Ziels (3) gesendet wird;
    - einen zweiten Schritt (102), gemäß dem ein an der Oberfläche des ersten Bereichs des festen Ziels (3) räumlich strukturiertes Plasma (5) mittels des genannten wenigstens einen Strukturierungsimpulses (4) geformt wird.

2. Verfahren (100) gemäß dem voranstehenden Anspruch, **dadurch gekennzeichnet, dass** bei dem ersten Schritt (101) ein einziger Strukturierungsimpuls (4) auf den ersten Bereich des festen Ziels (3) gesendet wird, wobei die räumliche Formgebung des einzigen Strukturierungsimpulses (4) dank einer der folgenden Techniken erhalten wird:

    - einem verformbaren Spiegel;
    - einer Phasenmaske;
    - einer Amplitudenmaske.

3. Verfahren (100) gemäß Anspruch 1, **dadurch gekennzeichnet, dass** bei dem ersten Schritt (101) eine Vielzahl von Strukturierungsimpulsen (4) an den ersten Bereich des festen Ziels (3) gesendet wird, wobei die Vielzahl von Strukturierungsimpulsen (4) an der Oberfläche des ersten Bereichs des festen Ziels (3) interferiert und die Bildung des an der Oberfläche des ersten Bereichs des festen Ziels (3) räumlich strukturierten Plasmas (5) nach sich zieht.

4. Verfahren (100) gemäß irgendeinem der voranstehenden Ansprüche, **dadurch gekennzeichnet, dass** der oder die Strukturierungsimpuls(e) (4) eine zeitliche Dauer von weniger als 1 Pikosekunde aufweist / aufweisen.

5. Verfahren (100) gemäß irgendeinem der voranstehenden Ansprüche, **dadurch gekennzeichnet, dass** der oder die Strukturierungsimpuls(e) (4) an der Oberfläche des ersten Bereichs des festen Ziels (3) eine Fluenz aufweist / aufweisen, die größer ist als der Laser-Schadensschwellenwert des Materials des ersten festen Ziels (3).

6. Verfahren (100) gemäß irgendeinem der voranstehenden Ansprüche, **dadurch gekennzeichnet, dass** es einen dritten Schritt (103) umfasst, gemäß dem mittels der Laserquelle (2) ein Laserhauptimpuls (PO) auf das zuvor an der Oberfläche des ersten Bereichs des festen Ziels (3) gebildete, räumlich strukturierte Plasma (5) gesendet wird, wobei der Laserhauptimpuls (PO) einen hohen zeitlichen Kontrast aufweist, so dass das zuvor an der Oberfläche des ersten Bereichs des festen Ziels (3) gebildete räumlich strukturierte Plasma (5) nicht durch einen Sockel des Laser-Hauptimpulses (PO) zerstört wird, um die effektive Bestrahlung des durch den Laserhauptimpuls (PO) räumlich strukturierten Plasmas (5) und die Interaktion des genannten, räumlich strukturierten Plasmas (5) mit dem genannten Laserhauptimpuls (PO) zu erlauben.

7. Verfahren (100) gemäß dem voranstehenden Anspruch, **dadurch gekennzeichnet, dass** die zeitliche Frist zwischen dem oder den bei dem ersten Schritt (101) versandten Strukturierungsimpuls(en) (4) einerseits und dem bei dem dritten Schritt (103) versandten Laserhauptimpuls (PO) andererseits geringer ist als 100 Pikosekunden.

8. Verfahren (100) gemäß irgendeinem der voranstehenden Ansprüche, **dadurch gekennzeichnet, dass** es einen räumlichen Strukturierungsschritt des ersten Bereichs des festen Ziels (3) mit einer ersten Struktur und einen räumlichen Strukturierungsschritt eines zweiten Bereichs des festen Ziels (3) mit einer zweiten Struktur umfasst, wobei die zweite Struktur von der ersten Struktur räumlich unterschiedlich ist.

9. Verfahren (100) gemäß dem voranstehenden Anspruch, **dadurch gekennzeichnet, dass** die erste und zweite räumliche Struktur durch wenigstens einen der folgenden Parameter unterschiedlich sind:

    - ihre räumliche Periode;
    - ihre Tiefe.

**Claims**

1. A method (100) for the optically controlled dynamic spatial structuring of a plasma on a solid target (3) including the following steps:

   - a first step (101) in which, by means of a laser source (2), at least one laser pulse (4) having a spatial shaping, called a "structuring pulse", is sent onto a first zone of the solid target (3);
   - a second step (102) in which a spatially structured plasma (5) is formed at the surface of the first zone of the solid target (3) by means of said at least one structuring pulse (4).

2. The method (100) according to the preceding claim, **characterised in that** a single structuring pulse (4) is sent onto the first zone of the solid target (3) during the first step (101), the spatial shaping of the single structuring pulse (4) being achieved by means of one of the following techniques:

   - a deformable mirror;
   - a phase mask;
   - an amplitude mask.

3. The method (100) according to claim 1, **characterised in that** a plurality of structuring pulses (4) is sent onto the first zone of the solid target (3) during the first step (101), the plurality of structuring pulses (4) interfering at the surface of the first zone of the solid target (3) and causing the formation of the spatially structured plasma (5) at the surface of the first zone of the solid target (3).

4. The method (100) according to any of the preceding claims, **characterised in that** the structuring pulse(s) (4) has (have) a time duration lower than 1 picosecond.

5. The method (100) according to any of the preceding claims, **characterised in that** the structuring pulse(s) (4) has (have), at the surface of the first zone of the solid target (3), a fluence higher than the laser damage threshold of the material of the first solid target (3).

6. The method (100) according to any of the preceding claims, **characterised in that** it includes a third step (103) in which, by means of the laser source (2), a main laser pulse (P0) is sent onto the spatially structured plasma (5) formed beforehand at the surface of the first zone of the solid target (3), the main laser pulse (P0) having a high time contrast, such that the spatially structured plasma (5) formed beforehand at the surface of the first zone of the solid target (3) is not destroyed by a pedestal of the main laser pulse (P0), to enable the spatially structured plasma (5) to be efficiently irradiated by the main laser pulse (P0) and said spatially structured plasma (5) to interact with said main laser pulse (P0).

7. The method (100) according to the preceding claim, **characterised in that** the time delay between the structuring pulse(s) (4) sent during the first step (101) on the one hand, and the main laser pulse (P0) sent during the third step (103) on the other hand, is lower than 100 picoseconds.

8. The method (100) according to any of the preceding claims, **characterised in that** it includes a step of spatially structuring the first zone of the solid target (3) with a first structure, and a step of spatially structuring a second zone of the solid target (3) with a second structure, the second structure being spatially distinct from the first structure.

9. The method (100) according to the preceding claim, **characterised in that** the first and second spatial structures are distinct by at least one of the following parameters:

   - their spatial period;
   - their depth.

100

101

102

103

**Fig. 1**

1

2

P0

4

3

5

**Fig. 2**

Fig. 3a

Fig. 3b

Fig. 3c

D0

D12

**Fig. 4b**  20μm

M0  M2  δ₂  δ₁  M1  ~10  T₂  T₁  T₂  Dia2  Mask  Dia0  T₁  Dia1

**Fig. 4a**

Time=0.28ps

L1

z (μm)

x (μm)

**Fig. 4c**

Time=0.96PS

L2

x (μm)

**Fig. 4d**

Fig. 5a

Fig. 5b

Fig. 5c

**Fig. 5d**

**Fig. 6a**

**Fig. 6b**

pha2       amp2

$\Phi_n > 0$

G

## Fig. 6c

R2    D2

R2

R2

-0.02      0      0.02

$\Theta_x$ (rad)

## Fig. 6d

amp3        amp3

$\Phi_n=0$

G

**Fig. 6e**

D3        R3

R3        R3

-0.02        0        0.02

$\Theta_x$ (rad)

**Fig. 6f**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PAI et al.** Fabrication of spatial transient-density structures as high-field plasma photonic devices. *Physics of Plasmas,* 2005, vol. 12 (070707), 1-4

- **J. P. COLOMBIER et al.** *Phys. Rev. B,* 2006, vol. 74, 224106
- **M. YEUNG et al.** Particle-In-Cell. *Phys. Rev. Lett.,* 2013, vol. 110, 165002